# EUROPEAN PATENT APPLICATION

(11) **EP 2 735 951 A1**
(43) Date of publication of application: **28.05.2014**
(21) Application number: 11865578.6
(22) Date of filing: 09.09.2011
(51) Int. Cl.: G06F 3/048

(54) **METHOD FOR PROCESSING DOCUMENTS BY TERMINAL HAVING TOUCH SCREEN AND TERMINAL HAVING TOUCH SCREEN**

(30) Priority: 18.07.2011 CN 201110200397
(71) Applicant: ZTE Corporation, Shenzhen, Guangdong 518057 (CN)
(72) Inventor: XUE, Tao, Shenzhen Guangdong 518057 (CN); ZHANG, Weidong, Shenzhen Guangdong 518057 (CN)
(74) Representative: Petraz, Gilberto Luigi
(86) International application number: PCT/CN2011/079522
(87) International publication number: WO 2012/155415

(57) **Abstract**

A method for processing a document by a terminal with a touch screen and a terminal with a touch screen are provided, wherein, the method includes: the terminal storing a control region corresponding to a document operation and an operation mode for the control region; the terminal monitoring the control region, and when it is determined that the monitored operation mode for the control region is coincident with the operation mode for the control region stored by the terminal, operating the document according to the document operation corresponding to the control region. The above method for processing a document by a terminal with a touch screen and a terminal with a touch screen enable the user to set up the operation region on different positions of the touch screen flexibly, thus largely improving the reading experience of the user.

## Description

### Technical Field

The present document relates to the field of communications, and in particular, to a method for processing a document by terminal with a touch screen and a terminal with a touch screen.

### Background of the Related Art

With the continuous development of communication technologies, more and more wireless terminal devices come into people's life and these wireless mobile terminal devices greatly change the way people browse the document due to convenient portability and mobility requirements.

Existing mobile terminals with a touch screen often perform control operations when a document is read by a user performing point touching or sliding on the touch screen during the display of the document. For example, left-right partition is performed on the screen, and the left region of the screen is touched at a point or the screen is slide to the left to switch to the previous page, the right region of the screen is touched at a point or the screen is slide to the right to switch to the next page; and the screen is slide from the top down to switch the document to the next page or switch to downward several rows, and the screen is slide from the down up to switch the document to the previous page or switch to upward several rows. This setup seems reasonable, but in practice, the user experience is not good.

When reading a novel or a document with many pages, a user often needs to use fingers to switch the pages up and down or switch the rows up and down continuously, such operations tends to cause fatigue of the user's finger due to relatively fixed key position and due to the different mobile phone sizes; for example, when a terminal is hold by a person's right hand, the person's thumb is naturally put on the left side of the screen, while in order to switch to the back page with the thumb, it needs to curl up the thumb to the right side of the screen continuously, such long-term operations necessarily cause fatigue of the finger; similarly, when the terminal is hold by the person's left hand, the person's thumb is naturally put on the right side of the direction key, when it is switched to the front page, it needs to curl up the thumb to the left side of the screen continuously, such long-term operations also necessarily cause fatigue of the finger; in addition, if the operation is performed with the finger of the other hand, it also needs to maintain a fixed posture for a long time, which will also cause the fatigue; and when multiple rows are switched by sliding with figures, it also cause a problem of the positioning being not accurate enough.

### Summary of the Invention

The present document provides a method for processing a document by a terminal with a touch screen and a terminal with a touch screen, to solve the problem of inconvenient operation brought to the user due to the fixed control mode of the document.

The present document provides a method for processing a document by a terminal with a touch screen, comprising:
the terminal storing a control region set up by a user corresponding to a document operation and an operation mode for the control region; and
the terminal monitoring the control region, and when it is determined that a monitored operation mode for the control region is coincident with the operation mode for the control region stored by the terminal, operating the document according to the document operation corresponding to the control region.

Preferably, the operation mode for the control region is single-touch, double-touch, long-press, short-press or slide.

Preferably, the control region is displayed in a form of watermark.

Preferably, the document includes one or more of the following documents:
a text document, a picture document or a webpage document;
when the document is a picture document, the document operation includes one or more of the following operations: scaling-up, scaling-down, moving and picture switching operations;
when the document is a text document, the document operation includes one or more of the following operations: page turning and row up-down switching operations; and
when the document is a webpage document, the document operation includes one or more of the following operations: focused term up-down switching, focused term left-right switching and page switching operations.

Preferably, the control region includes one or more regions located on the left side and/or right side of the touch screen of the terminal.

The present document further provides a terminal with a touch screen, comprising:
a storage module, configured to store a control region set up by a user corresponding to a document operation and an operation mode for the control region; and
a processing module, configured to monitor the control region, and when it is determined that an operation mode for the control region is coincident with the operation mode for the control region stored by the storage module, operate the document according to the document operation corresponding to the control region.

Preferably, the operation mode for the control region is single-touch, double-touch, long-press, short-press or slide.

Preferably, the control region is displayed in a form of watermark.

Preferably, the document includes one or more of the following documents:
a text document, a picture document or a webpage document;
when the document is a picture document, the document operation includes one or more of the following operations: scaling-up, scaling-down, moving and picture switching operations;
when the document is a text document, the document operation includes one or more of the following operations: page turning and row up-down switching operations; and
when the document is a webpage document, the document operation includes one or more of the following operations: focused term up-down switching, focused term left-right switching and page switching operations.

Preferably, the control region includes one or more regions located on the left side and/or right side of the touch screen of the terminal.

The above method for processing a document by a terminal with a touch screen and a terminal with a touch screen enable the user to set up an operation region on different positions of the touch screen flexibly, thus largely improving the reading experience of the user.

### Brief Description of Drawings

Fig. 1 is a flowchart of an embodiment of a method for processing a document by a terminal with a touch screen according to the present document;
Fig. 2 is a diagram of a control region of an embodiment of a terminal with a touch screen according to the present document;
Fig. 3 is a diagram of a control region of an embodiment of a PAD-type terminal according to the present document; and
Fig. 4 is a diagram of a structure of an embodiment of a terminal with a touch screen according to the present document.

### Preferred Embodiments of the Invention

In order to make the purpose, technical solutions and advantages of the present document more clear and apparent, the embodiments of the present document will be further illustrated in detail hereinafter in conjunction with accompanying drawings. It should be illustrated that, in the case of no conflict, the embodiments in this application and the features in the embodiments can be combined randomly with each other.

The embodiments of the present document provide a method for processing a document by a terminal with a touch screen, comprising the following steps.

In step 101, the terminal stores a control region set up by a user corresponding to a document operation and an operation mode for the control region;
before or during the process that a user reads the current document, a setup request is transmitted to the terminal, the terminal displays a setup wizard according to the setup request of the user for the current document, and stores an operation set up by the user, a control region corresponding to the operation and an operation mode for the control region; specifically, the user is caused to operate by means of providing a sample text to record the operation mode. For example, the sample text is displayed first, to prompt the user to input a gesture (for example, sliding upward) to decide to turn a page upward, then the user touches at a point where the thumbs of the right and left hands are naturally put on the screen, then the region touched at a point is recorded to represent page upward turning; and so on, other setups can be completed by such modes;

Wherein, the operation mode for the control region is single-touch, double-touch, long-press, short-press or slide.

Of course, the setup of the control region should not influence reading a document by a user, and the control region can be displayed in a form of watermark; or it can be hidden, and is displayed only when the user presses the corresponding region;

In step 102, the terminal monitors the control region, and when it is determined that the operation mode for the control region is coincident with the operation mode for the control region stored by the terminal, operates the document according to the operation corresponding to the control region.

Wherein, the current document includes one or more of the following documents: a text document, a picture document or a webpage document; when the above document is a picture document, the operation includes one or more of the following operations: scaling-up, scaling-down, moving and picture switching operations; when the above document is a text document, the operation includes one or more of the following operations: page turning and row up-down switching operations; and when the above document is a webpage document, the operation includes one or more of the following operations: focused term up-down switching, focused term left-right switching and page switching operations.

For different operations corresponding to different documents, a region which is best suitable to be touched by a user may be selected; for example, when the mobile phone is hold by the left hand, the control region can be a screen region which the thumb of the left hand naturally touches; and if the mobile phone is hold by the right hand, the control region can be a screen region which the thumb of the right hand naturally touches.

In addition, multiple control regions can also be used to represent the same operation in the document, that is, the control region can be set up as a region where the thumb of the left hand and the thumb of the right hand naturally touch the screen simultaneously.

The above method for processing a document by a terminal with a touch screen enables the user to set up a control region by himself/herself at different positions on the touch screen, thus reducing the feeling of fatigue caused by operating only a key with a fixed position or a single fixed operation for a long time, which largely improves the reading experience of the user; and the above method can be implemented only with the need to make suitable changes to the software of the terminal.

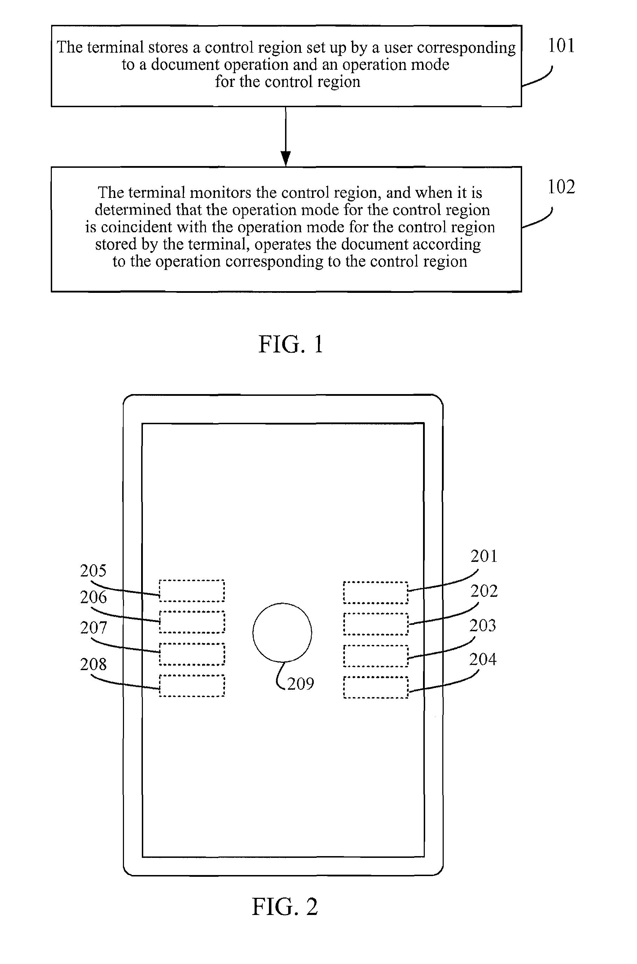

As shown in Fig. 2, it is a diagram of a control region of an embodiment of a terminal with a touch screen according to the present document, by example of displaying a text-type document, a user can set up regions 201, 202 as front-back page switching control region, and set up regions 203, 204 as up-down row switching control region, which facilitates that the region where the thumb of the left hand is put can be used to control the display of the document when the mobile phone is hold by the left hand to read the file, and it is more in line with the custom of the user than necessarily switching to the front page by touching the left half of the screen at a point and switching to the back page by touching the right half of the screen at a point previously; and is more operationally convenient and accurate than switching to the next page or switching to the downward several rows of the document by sliding the screen from the top down and switching to the front page or switching to the upward several rows of the document by sliding the screen from the down up by the user, and at the same time, it can also largely reduce the feeling of fatigue due to the thumb being in a tension state caused by the user using a direction key.

Similarly, when a user holds the mobile phone by the right hand to read with the mobile phone, the user can set up regions 205, 206 as front-back page switching control regions and set up regions 207, 208 as up-down row switching control regions; and the user can also set up control regions 201-208 at the same time, and thereby, when the mobile phone is in use by the user, it can largely reduce the feeling of fatigue of the figures caused by operations such as continuous page turning or row switching, no matter whether the user is reading with the mobile phone in the left hand or is reading with the mobile phone in the right hand.

Of course, the control for the document corresponding to the operations by the user here is not limited to operations such as page turning or row switching, and other types of frequent operations can be set up in this way.

Before reading the document, the user can make such setup, and can also set up at any time when reading the document, for example, when reading the document, the user retrieves a menu by operating the region 209, to redefine the control region of various operation of the document; this can also ensure that the user can re-modify the mode for controlling the region when having feeling of fatigue on the existing key operation during a long time of reading; at the same time, the region 209 is in the center of the screen, which is just the position where the thumb is naturally put, and operating through that region is more convenient for the user to operate than the current pop-up setup menu through a bottom menu key for the existing mobile phone with a touch screen.

In addition, operations for different region are not limited to single-press, and can also be operations such as multi-press, long-press, short-press, slide.

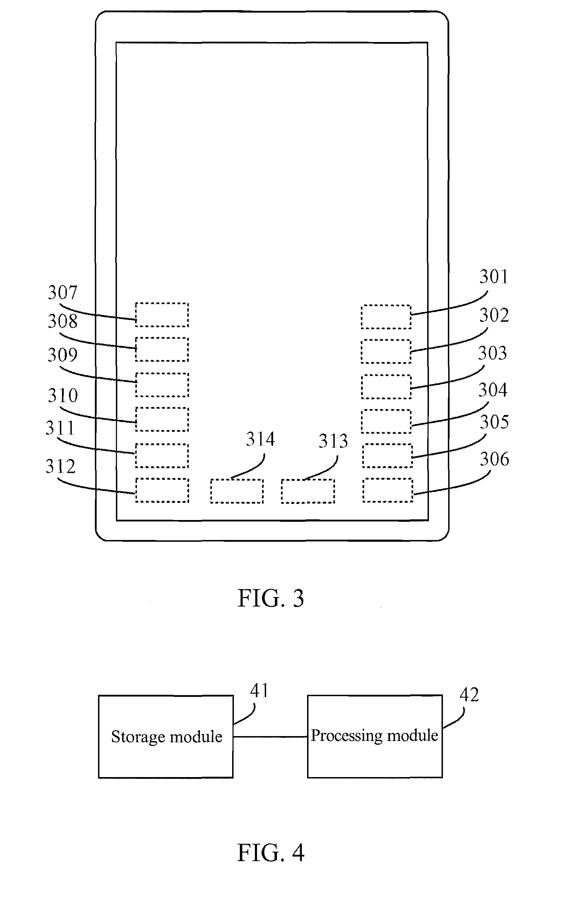

As shown in Fig. 3, it is a diagram of a control region of an embodiment of a PAD type terminal according to the present document, by example of displaying a picture type document, a user can set up regions 301, 302 as front-back picture switching control regions, and set up regions 303, 304 as scaling up-down switching control regions, set up regions 305, 306 as left-right moving control regions (up-down moving is similar, and will not be described again), which facilitates that the region where the thumb of the right hand is naturally put can be used to control the picture browsing when the PAD is hold by the right hand for picture browsing, it is more quick than the operation by means of sliding and multi-point touching on the screen originally.

Similarly, when a user holds the mobile phone by the left hand to read with the mobile phone, the user can set up regions 307, 308 as front-back switching control regions, set up regions 309, 310 as up-down row switching control regions, and set up regions 311, 312 as left-right moving control regions (up-down moving is similar, and will not be described again);
in addition, the user can set up control regions 301-312 simultaneously, and therefore, when the PAD is in use by the user, this can largely reduce the feeling of fatigue of the figures due to operations such as continuous page turning or scaling, no matter whether the user is reading with a mobile phone in the left hand or the user is reading with a mobile phone in the right hand; and at the same time, the user can break away from the operation way of necessarily holding the PAD in one hand and operating the PAD in the other hand during the previous operations, and can conveniently operate the PAD at any time when walking and standing.

Of course, the control of the document corresponding to the operations of the control region by the user here is not limited to operations such as page turning or row switching, and other types of frequent operations can be set up by this way.

Before reading the document, the user can make such setup, and can also set up at any time when reading the document, for example, when reading the document, the user retrieves a menu by operating the region 313 or 314, to redefine the control region of various operations of the document; this can also ensure that the user can re-modify the mode for controlling the region when having feeling of fatigue on the existing key operation during a long time of reading.

In addition, the operations for the control region are not limited to single-press, and can also be operations such as multi-press, long press, short press, slide. Under normal conditions, the range where the thumbs of both hands naturally touch the screen of the PAD when the user holds the PAD by both hands is an ideal setup region.

As shown in Fig. 4, it is a diagram of a structure of an embodiment of a terminal with a touch screen according to the present document, and the terminal includes a storage module 41 and a processing module 42, wherein,
the storage module 41 is configured to store a control region set up by a user corresponding to a document operation and an operation mode for the control region; and
the processing module 42 is configured to monitor the control region, and when it is determined that the operation mode for the control region is coincident with the operation mode for the control region stored by the terminal, operate the document according to the operation corresponding to the control region.

Wherein, the operation mode for the control region is single-touch, double-touch, long-press, short-press or slide. The control region is displayed in a form of watermark.

In addition, the above document includes one or more of the following documents: a text document, a picture document or a webpage document.

Preferably, when the above document is a picture document, the operation includes one or more of the following operations: scaling-up, scaling-down, moving and picture switching operations; when the above document is a text document, the operation includes one or more of the following operations: page turning and row up-down switching operations; and when the above document is a webpage document, the operation includes one or more of the following operations: focused term up-down switching, focused term left-right switching and page switching operations.

The above module can be widely applied in various terminal devices, such as mobile phones, desk phones etc. In addition, the terminal can set up control regions according to the requirements of the user, thus reducing the feeling of fatigue due to operating only a key with a fixed position or a single fixed operation for a long time, which largely improves the reading experience of the user.

Those of ordinary skill in the art can understand that all or part of steps in the above method can be implemented by programs instructing related hardware, which can be stored in a computer readable storage medium, such as a read-only memory, a disk or a disc etc. Alternatively, all or part of steps in the above examples can also be implemented by one or more integrated circuits. Accordingly, each module/unit in the above examples can be implemented in the form of hardware, or can also be implemented in the form of software functional module. The present document is not limited to any particular form of a combination of hardware and software.

The above embodiments are only used to illustrate the technical schemes of the present document without limitation, and the present document is only described in detail with reference to preferable embodiments. Those of ordinary skill in the art should understand that modifications or equivalent substitutions can be made on present document without departing from the spirit and scope of the technical schemes of the present document, all of which should be contained in the scope of the claims of the present document.

### Industrial Applicability

The user can be enabled to set up an operation region on different positions of the touch screen flexibly, thus largely improving the reading experience of the user.

## Claims

1. A method for processing a document by a terminal with a touch screen, comprising:
the terminal storing a control region set up by a user corresponding to a document operation and an operation mode for the control region; and
the terminal monitoring the control region, and when it is determined that a monitored operation mode for the control region is coincident with the operation mode for the control region stored by the terminal, operating the document according to the document operation corresponding to the control region.

2. The method according to claim 1, wherein,
the operation mode for the control region is single-touch, double-touch, long-press, short-press or slide.

3. The method according to claim 1, wherein,
the control region is displayed in a form of watermark.

4. The method according to claim 1, wherein,
the document comprises one or more of the following documents:
a text document, a picture document or a webpage document;
when the document is a picture document, the document operation comprises one or more of the following operations: scaling-up, scaling-down, moving and picture switching operations;
when the document is a text document, the document operation comprises one or more of the following operations: page turning and row up-down switching operations; and
when the document is a webpage document, the document operation comprises one or more of the following operations: focused term up-down switching, focused term left-right switching and page switching operations.

5. The method according to any of claims 1-4, wherein,
the control region comprises one or more regions located on a left side and/or right side of the touch screen of the terminal.

6. A terminal with a touch screen, comprising:
a storage module, configured to store a control region set up by a user corresponding to a document operation and an operation mode for the control region; and
a processing module, configured to monitor the control region, and when it is determined that a monitored operation mode for the control region is coincident with the operation mode of the control region stored by the terminal, operate the document according to the document operation corresponding to the control region.

7. The terminal according to claim 6, wherein,
the operation mode for the control region is single-touch, double-touch, long-press, short-press or slide.

8. The terminal according to claim 6, wherein,
the control region is displayed in a form of watermark.

9. The terminal according to claim 6, wherein,
the document comprises one or more of the following documents:
a text document, a picture document or a webpage document;
when the document is a picture document, the document operation comprises one or more of the following operations: scaling-up, scaling-down, moving and picture switching operations;
when the document is a text document, the document operation comprises one or more of the following operations: page turning and row up-down switching operations; and
when the document is a webpage document, the document operation comprises one or more of the following operations: focused term up-down switching, focused term left-right switching and page switching operations.

10. The terminal according to any of claims 6-9, wherein,
the control region comprises one or more regions located on a left side and/or right side of the touch screen of the terminal.
